# EUROPÄISCHE PATENTSCHRIFT

(11) **EP 1 356 995 B1**
(45) Veröffentlichungstag und Bekanntmachung des Hinweises auf die Patenterteilung: **13.08.2008**
(21) Anmeldenummer: 03005883.8
(22) Anmeldetag: 15.03.2003
(51) Int. Cl.: B60R 13/00, B60R 13/10

(54) **Schriftzug für ein Fahrzeug**
Graphic plate for a vehicle
Plaquette graphique pour véhicule

(30) Priorität: 24.04.2002 DE 10218250; 05.12.2002 DE 10256721
(43) Veröffentlichungstag der Anmeldung: 29.10.2003
(73) Patentinhaber: Dr. Ing. h.c. F. Porsche Aktiengesellschaft, 70435 Stuttgart (DE)
(72) Erfinder: Wolf, Erhard, 70374 Stuttgart (DE)

(56) Entgegenhaltungen:
- GB-A- 2 205 190
- US-A- 4 879 826
- US-A- 4 977 695
- US-A- 5 029 053
- US-A- 5 150 960
- US-A- 5 150 961

## Beschreibung

Die Erfindung betrifft einen Schriftzug für ein Fahrzeug, der einen mit einem lichtundurchlässigen Oberflächenüberzug versehenen dreidimensionalen Grundkörper umfaßt, wobei eine Rückseite des Schriftzuges auf ein Fahrzeugteil aufgesetzt und daran befestigt ist.

Schriftzüge der eingangs genannten Gattung sind herkömmlicher Weise aus Aluminium oder lichtundurchlässigem Kunststoff gefertigt und durchgehend mit einem lichtundurchlässigen Oberflächenüberzug versehen. Die Befestigung der Schriftzüge an einem im Fahrgastraum oder an der Fahrzeugaußenseite angeordneten Fahrzeugteil erfolgt durch Kleben, Klipsen, Schrauben oder dergleichen. Derartige Schriftzüge haben den Nachteil, daß sie in der Dämmerung bzw. in der Dunkelheit nicht mehr erkennbar sind.

Das Dokument US4879826A1 beschreibt einen Schriftzug für ein Fahrzeug, der einen mit einem lichtundurchlässigen Oberflächenüberzug versehenen dreidimensionalen Grundkörper umfasst, wobei eine Rückseite des Grundkörpers auf ein Fahrzeugteil aufgesetzt und daran befestigt ist.

Aufgabe der Erfindung ist es, an einem Schriftzug solche Vorkehrungen zu treffen, daß er auch in der Dämmerung bzw. bei Dunkelheit erkennbar ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die erfindungsgemäße Anordnung ein Schriftzug mit einer quasi indirekten Beleuchtung geschaffen wird, der einerseits in der Dämmerung bzw. bei Dunkelheit erkennbar ist und durch den andererseits andere Verkehrsteilnehmer nicht geblendet werden. Bei an der Fahrzeugaußenseite angeordneten Schriftzügen tragen diese zur Erhöhung der Sicherheit bei, da abgestellte Fahrzeuge bei Dunkelheit schneller erkennbar sind. Ferner stellen die beleuchteten Schriftzüge eine ästhetisch ansprechende Ausgestaltung dar. Die beleuchteten Schriftzüge bestehen aus einem dreidimensionalen Grundkörper aus lichtdurchlässigem Kunststoff wie ABS oder Polycarbonat und weisen einen galvanischen oder lackierten Oberflächenüberzug auf, an dem zumindest eine umlaufende seitliche Umrißlinie durch örtliches Lasern des Oberflächenüberzugs gebildet wird. Die Umrißlinie weist eine geringe Breite auf. An der Rückseite des Schriftzuges ist ein Hohlzylinder zur Aufnahme einer Leuchtdiode angespritzt, wobei die Leuchtdiode mit einer Stromquelle verbunden ist. Die Stromquelle für den Schriftzug kann beim Einschalten der Scheinwerfer, beim Einschalten der seitlichen Begrenzungsleuchten, beim Bremsen oder dgl. aktiviert werden, so daß eine leichtere Identifizierbarkeit des Fahrzeugherstellers oder Fahrzeugtyps auch bei Dunkelheit gewährleistet ist.

Ein Ausführungsbeispiel der Erfindung ist in der Zeichnung dargestellt und wird im folgenden näher beschrieben.
Es zeigt
- Fig. 1: eine Ansicht von hinten auf ein Fahrzeug mit einem Schriftzug,

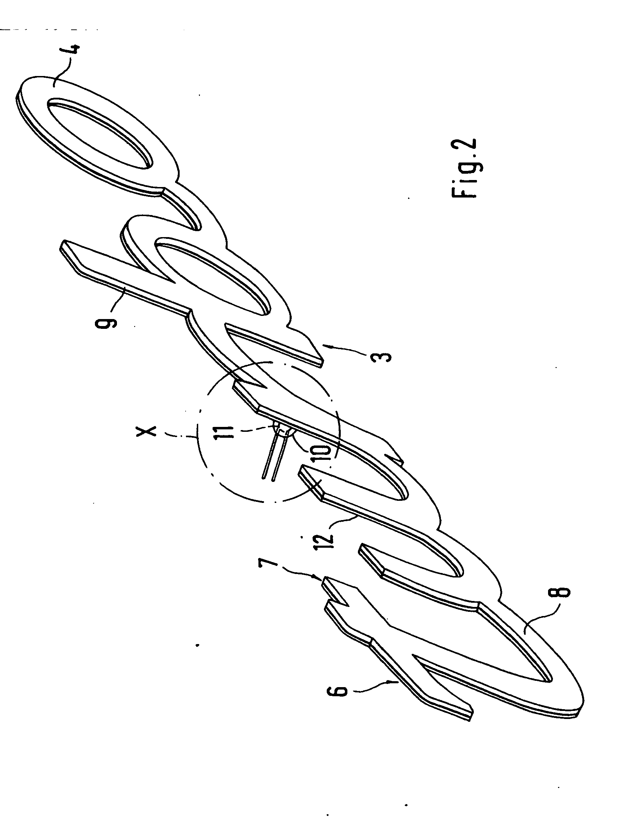

- Fig. 2: den Schriftzug in perspektivischer Darstellung,
- Fig. 3: ein Detail X der Fig. 2 in größerer Darstellung.

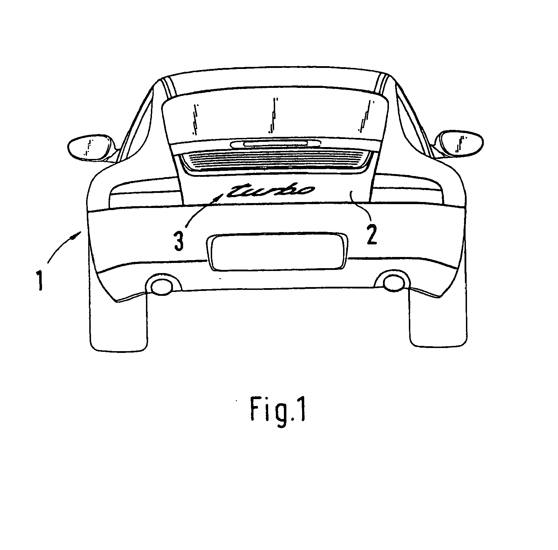

In Fig. 1 ist der Heckbereich eines Personenkraftwagens 1 gezeigt, wobei an einem die Fahrzeugaußenseite bildenden heckseitigen Fahrzeugteil 2 ein außenliegender dreidimensionaler Schriftzug 3 vorgesehen ist. Der Schriftzug 3 kann jedoch auch im Frontbereich, an den Seitenflächen oder im Innenraum des Personenkraftwagens 1 an einem Ausstattungs- oder Karosserieteil angeordnet sein.

Der Schriftzug 3 umfaßt einen dreidimensionalen, mit einem lichtundurchlässigen Oberflächenüberzug 4 versehenen Grundkörper 5, wobei eine Rückseite 6 des Grundkörpers 5 auf die Außenseite des Fahrzeugteils 2 aufgesetzt und daran befestigt ist.

Die Befestigung kann durch Kleben, Schrauben, Klipsen oder dgl. sowie durch eine Kombination dieser Befestigungsverfahren erfolgen. Der Oberflächenüberzug 4 wird durch eine galvanische Schicht oder eine Lackschicht gebildet und bedeckt vorzugsweise den gesamten Grundkörper 5. Der Schriftzug 3 wird durch eine aneinandergesetzte Buchstaben- und/oder Zahlenfolge, ein Herstelleremblem oder dgl. gebildet. Erfindungsgemäß ist der Schriftzug 3 mit einer indirekten Beleuchtung 7 versehen. Die indirekte Beleuchtung 7 ist an einer zwischen der Rückseite 6 und der sichtbaren Vorderseite 8 des dreidimensionalen Grundkörpers 5 angeordneten seitlichen Randfläche 9 wirksam, wobei die Randfläche 9 etwa senkrecht zur Rückseite 6 ausgerichtet ist. Zur Bildung der indirekten Beleuchtung 7 besteht der Grundkörper 5 durchgehend aus einem lichtdurchlässigem Kunststoffmaterial, beispielsweise ABS, Polycarbonat oder dergleichen.

An der Rückseite 6 des Grundkörpers 5 ist im Ausführungsbeispiel wenigstens ein Hohlzylinder 10 zur Aufnahme einer Leuchtdiode 11 angespritzt, die mit einer nicht näher dargestellten Stromquelle in Wirkverbindung steht. Im vorgesehenen seitlichen Abstrahlbereich der indirekten Beleuchtung 7 ist der Oberflächenüberzug 4 des Schriftzuges 3 örtlich wieder entfernt, dergestalt, daß wenigstens eine umlaufende ringförmig geschlossene Umrißlinie 12 gebildet wird, so daß bei eingeschalteter Leuchtdiode 11 eine schmale umlaufende Lichtlinie gebildet ist. Das Entfernen des Oberflächenüberzugs 4 erfolgt im Ausführungsbeispiel durch Lasern. Der Oberflächenüberzug 4 kann jedoch auch durch andere Verfahren örtlich wieder abgetragen werden. Die zumindest eine umlaufende Umrißlinie 12 weist entlang ihrer Längserstreckung eine geringe gleichbleibende Breite auf. Im Ausführungsbeispiel ist eine Breite von ca. 0,2 ± 0,1 mm vorgesehen. Die Breite kann jedoch auch größer ausgebildet sein.

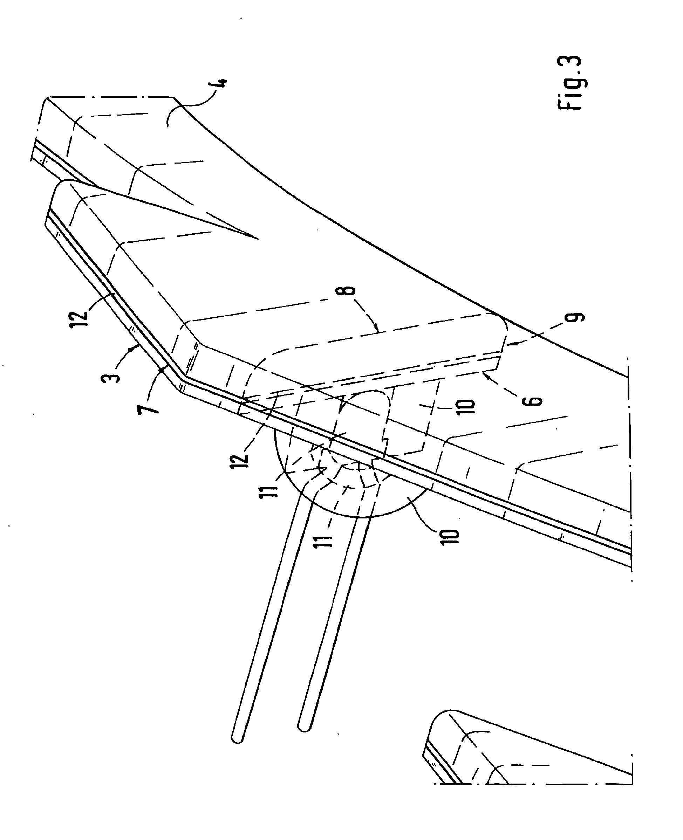

Gemäß Fig. 3 verläuft die umlaufende Umrißlinie 12 an der seitlichen Randfläche 9 des Schriftzuges 3 und zwar vorzugsweise benachbart der angrenzenden Rückseite 6. Die Umrißlinie 12 kann innenseitig und/oder außenseitig an den Buchstaben bzw. Zahlen vorgesehen sein.

Die Ansteuerung der Stromquelle kann so ausgebildet sein, daß die Stromquelle beim Einschalten der Scheinwerfer, der seitlichen Begrenzungsleuchten, der Innenraumbeleuchtung, beim Bremsen oder in Abhängigkeit eines Helligkeitssensors aktiviert wird. Die indirekte Beleuchtung 7 verleiht dem Schriftzug 3 ein optisch ansprechendes Aussehen. Durch den beleuchteten Schriftzug 3 ist der Fahrzeughersteller bzw. der Fahrzeugtyp auch bei Dunkelheit erkennbar und parkende Fahrzeuge werden bei Dunkelheit bei beleuchtetem Schriftzug 3 schneller wahrgenommen, was zur Erhöhung der Verkehrssicherheit beiträgt.

## Patentansprüche

1. Schriftzug für ein Fahrzeug, der einen mit einem lichtundurchlässigen Oberflächenüberzug versehenen dreidimensionalen Grundkörper umfaßt, wobei eine Rückseite des Grundkörpers auf ein Fahrzeugteil aufgesetzt und daran befestigt ist, **dadurch gekennzeichnet, daß** der Schriftzug (3) mit einer indirekten Beleuchtung (7) versehen ist.

2. Schriftzug nach Anspruch 1, **dadurch gekennzeichnet, daß** die indirekte Beleuchtung (7) an einer umlaufenden zwischen der Rückseite (6) und der Vorderseite (8) des dreidimensionalen Grundkörpers (5) angeordneten Randfläche (7) wirksam ist.

3. Schriftzug nach Anspruch 1, **dadurch gekennzeichnet, daß** zur Bildung der indirekten Beleuchtung (7) der Grundkörper (5) durchgehend aus lichtdurchlässigem Kunststoffmaterial besteht, daß an der Rückseite (6) des Grundkörpers (5) wenigstens eine Leuchtdiode (11) angeordnet ist und daß der Oberflächenüberzug (4) des Schriftzuges (3) bereichsweise wieder entfernt ist, dergestalt, daß zumindest eine umlaufende ringförmig geschlossene Umrißlinie (12) gebildet ist, so daß bei eingeschalteter Leuchtdiode (11) eine Lichtlinie gebildet ist.

4. Schriftzug nach einem der vorangegangenen Ansprüche, **dadurch gekennzeichnet, daß** der Grundkörper (5) einen galvanischen oder lackierten Oberflächenüberzug (4) aufweist.

5. Schriftzug nach einem der vorangegangenen Ansprüche, **dadurch gekennzeichnet, daß** die zumindest eine umlaufende Umrißlinie (12) durch örtliches Lasern des Oberflächenüberzugs (4) gebildet wird.

6. Schriftzug nach einem der vorangegangenen Ansprüche, **dadurch gekennzeichnet, daß** die Umrißlinie (12) entlang ihrer Längserstreckung eine relativ geringe Breite aufweist.

7. Schriftzug nach einem der vorangegangenen Ansprüche, **dadurch gekennzeichnet, daß** der Grundkörper (5) aus lichtdurchlässigem ABS oder Polycarbonat gefertigt ist.

8. Schriftzug nach einem der vorangegangenen Ansprüche, **dadurch gekennzeichnet, daß** die umlaufende Umrißlinie (12) benachbart der Rückseite (6) des Schriftzuges (3) an der seitlichen Randfläche (9) verläuft.

9. Schriftzug nach einem der vorangegangenen Ansprüche, **dadurch gekennzeichnet, daß** die Stromquelle beim Einschalten der Scheinwerfer, beim Einschalten der seitlichen Begrenzungsleuchten, beim Einschalten der Innenraumbeleuchtung, beim Bremsen oder in Abhängigkeit eines Helligkeitssensors aktiviert wird.

## Claims

1. Letter badge for a vehicle, comprising a three-dimensional base body which has an opaque surface coating, wherein a rear side of the base body is placed onto a vehicle part and is fastened thereto, **characterized in that** the letter badge (3) is provided with indirect lighting (7).

2. Letter badge according to Claim 1, **characterized in that** the indirect lighting (7) is active at a peripheral edge face (7) which is arranged between the rear side (6) and the front side (8) of the three-dimensional base body (5).

3. Letter badge according to Claim 1, **characterized in that** for the purposes of producing the indirect lighting (7), the base body (5) completely consists of opaque plastic material, **in that** at least one light-emitting diode (11) is arranged on the rear side (6) of the base body (5) and **in that** the surface coating (4) of the letter badge (3) is removed again in places such that at least one peripheral, annularly closed contour line (12) is formed, with the result that a light line is formed when the light-emitting diode (11) is switched on.

4. Letter badge according to one of the preceding claims, **characterized in that** the base body (5) has a galvanic or varnished surface coating (4).

5. Letter badge according to one of the preceding claims, **characterized in that** the at least one peripheral contour line (12) is formed by local lasing of the surface coating (4).

6. Letter badge according to one of the preceding claims, **characterized in that** the contour line (12) has a relatively narrow width along its longitudinal extent.

7. Letter badge according to one of the preceding claims, **characterized in that** the base body (5) is made from opaque ABS or polycarbonate.

8. Letter badge according to one of the preceding claims, **characterized in that** the peripheral contour line (12) extends at the lateral edge face (9) in a manner such that it adjoins the rear side (6) of the letter badge (3).

9. Letter badge according to one of the preceding claims, **characterized in that** the power source is activated when the headlights, the side parking lights or the interior lighting is switched on or during braking or as a function of the brightness sensor.

## Revendications

1. Logotype pour un véhicule, lequel comprend un corps de base tridimensionnel muni d'un revêtement de surface opaque, un côté arrière du corps de base étant posé sur une partie du véhicule et fixé à celle-ci, **caractérisé en ce que** le logotype (3) est muni d'un éclairage indirect (7).

2. Logotype selon la revendication 1, **caractérisé en ce que** l'éclairage indirect (7) agit sur une surface de bordure (7) circulaire disposée entre le côté arrière (6) et le côté avant (8) du corps de base (5) tridimensionnel.

3. Logotype selon la revendication 1, **caractérisé en ce que**, pour former l'éclairage indirect (7), le corps de base (5) se compose d'un seul tenant de matière plastique transparente à la lumière, qu'au moins une diode électroluminescente (11) est disposée sur le côté arrière (6) du corps de base (5) et que le revêtement de surface (4) du logotype (3) est de nouveau retiré dans certaines zones de manière à former au moins une ligne de contour (12) circulaire fermée en forme d'anneau de sorte qu'une ligne de lumière se forme lorsque la diode électroluminescente (11) est allumée.

4. Logotype selon l'une des revendications précédentes, **caractérisé en ce que** le corps de base (5) présente un revêtement de surface (4) galvanisé ou verni.

5. Logotype selon l'une des revendications précédentes, **caractérisé en ce que** l'au moins une ligne de contour (12) circulaire est formée par émission locale de rayons laser sur le revêtement de surface (4).

6. Logotype selon l'une des revendications précédentes, **caractérisé en ce que** la ligne de contour (12) présente une largeur relativement faible le long de sa projection longitudinale.

7. Logotype selon l'une des revendications précédentes, **caractérisé en ce que** le corps de base (5) est fabriqué dans un ABS ou un polycarbonate transparent.

8. Logotype selon l'une des revendications précédentes, **caractérisé en ce que** la ligne de contour (12) circulaire s'étend sur la surface de bordure (9) latérale à côté du côté arrière (6) du logotype (3).

9. Logotype selon l'une des revendications précédentes, **caractérisé en ce que** la source de courant est activée lors de la mise en marche des phares, lors de la mise en marche des feux de signalisation latéraux, lors de la mise en marche de l'éclairage de l'habitacle, lors du freinage ou en fonction d'un détecteur de luminosité.
